# DEMANDE DE BREVET EUROPEEN

(11) **EP 4 813 260 A1**
(43) Date de publication de la demande: **30.09.2026**
(21) Numéro de dépôt: 26163740.9
(22) Date de dépôt: 10.03.2026
(51) Int. Cl.: A47J 37/06

(54) **ENSEMBLE DE CUISSON COMPRENANT UN ELEMENT DE BLOCAGE, ET PROCEDE D' ASSEMBLAGE ASSOCIE**

(30) Priorité: 27.03.2025 FR 2503163
(71) Demandeur: Krampouz, 29700 Pluguffan (FR)
(72) Inventeur: LE NAIR, Anthony, 29700 PLUGUFFAN (FR)
(74) Mandataire: SEB Développement

(57) **Abrégé**

Ensemble de cuisson (100) d'un appareil de cuisson, comprenant
- un dispositif de cuisson ayant une plaque de cuisson (1) s'étendant dans un plan de cuisson et une vis (14) s'étendant perpendiculairement au plan de cuisson ;
- un élément de maintien (5) comprenant une portion centrale (50) et une portion latérale (51) ;
- un écrou (15) destiné à coopérer avec la vis (14) pour maintenir la portion centrale (50) de l'élément de maintien (5) contre le dispositif de cuisson ;
caractérisé en ce qu'il comprend en outre un élément de blocage (6) de l'écrou (15) comprenant une portion centrale (60) plane avec un orifice de blocage (64) dans lequel l'écrou (15) est destiné à être inséré et une portion latérale (61) configurée pour coopérer avec la portion latérale (51) de sorte à empêcher une rotation de l'écrou (15) autour de l'axe propre (P) de la vis (14).

## Description

### DOMAINE TECHNIQUE

La présente divulgation se rapporte au domaine général des appareils de cuisson, et plus particulièrement aux appareils de cuisson de type plancha comprenant une plaque de cuisson supportée par un élément de maintien.

### ETAT DE LA TECHNIQUE

La tendance croissante à cuisiner à l'extérieur avec des équipements modernes et pratiques a encouragé le développement de solutions innovantes qui répondent aux besoins des professionnels de la restauration en matière de performance, d'hygiène et de sécurité. Notamment, l'appareil de cuisson de type « plancha » permet de saisir des aliments de façon homogène, les aliments étant en sustentation sur une plaque de cuisson chauffée à la température adéquate, en général à une température très élevée.

Les plaques de cuisson traditionnelles sont généralement réalisées par moulage d'une plaque en fonte. Afin d'améliorer les propriétés de l'appareil de cuisson, une plaque de cuisson en acier laminé, en acier inoxydable ou en aluminium peut également être utilisée. Ces matériaux permettent d'avoir un temps de chauffe réduit et de faciliter le nettoyage de l'appareil de cuisson.

Toutefois, ces plaques ont tendance à se déformer sous l'effet de la chaleur produite par les moyens de chauffage en vis-à-vis, et présentent une faible inertie thermique. L'appareil de cuisson comprend ainsi un empilement de plaques serrées ensemble par un élément de maintien, garantissant un bon contact thermique tout en évitant des déformations de la plaque de cuisson lors de la chauffe.

L'élément de maintien est généralement maintenu contre l'empilement de plaques par des moyens de fixation tels que des systèmes vis-écrou. Ces moyens de fixation permettent un assemblage réversible et simple de l'empilement de plaques sur le support de l'appareil de cuisson. Toutefois, il a été observé que l'écrou avait tendance à se dévisser sous l'effet de la chaleur produite par les moyens de chauffage. Cela conduit à réduire les performances de l'appareil, en augmentant le temps de chauffe. Les plaques n'étant plus solidaire de l'élément de maintien, ce dernier ne peut alors plus remplir sa fonction première d'empêcher une déformation de la plaque de cuisson.

### EXPOSE DE L'INVENTION

Un but de la présente divulgation est de proposer un système permettant de maintenir une plaque de cuisson solidairement à un élément de maintien, quelles que soient les conditions extérieures, et notamment une température élevée lors de l'utilisation de l'appareil de cuisson, tout en permettant un assemblage et un démontage simple de l'ensemble de cuisson comprenant la plaque de cuisson.

Ce but est atteint par l'ensemble de cuisson comprenant
- un dispositif de cuisson ayant une plaque de cuisson s'étendant dans un plan de cuisson et une vis montée fixe sur la plaque de cuisson s'étendant perpendiculairement au plan de cuisson ;
- un élément de maintien comprenant une portion centrale plane comprenant un orifice traversant pour le passage de la vis et une portion latérale dans un plan latéral différent du plan de la portion centrale ;
- un écrou destiné à coopérer avec la vis pour maintenir la portion centrale de l'élément de maintien contre le dispositif de cuisson ;
caractérisé en ce qu'il comprend en outre un élément de blocage de l'écrou comprenant une portion centrale plane avec un orifice de blocage dans lequel l'écrou est destiné à être inséré et une portion latérale configurée pour coopérer avec la portion latérale de l'élément de maintien, de sorte à empêcher une rotation de l'écrou autour de l'axe propre de la vis.

L'ensemble de cuisson comprend une plaque de cuisson maintenue solidaire d'un élément de maintien par une vis coopérant avec un écrou. L'écrou peut être vissé sur la tige de la vis et serré de sorte que l'élément de maintien est convenablement fixé au dispositif de cuisson. L'utilisation de tels moyens de fixation réversibles permet un assemblage et un démontage simple de l'appareil de cuisson.

L'élément de blocage est mis en position autour de l'écrou après le vissage de ce dernier sur la vis, et peut ainsi être simplement retiré en cas de démontage. L'élément de blocage comprend une portion latérale coopérant avec la portion latérale de l'élément de maintien. Ces portions latérales permettent d'empêcher une rotation de l'écrou autour de l'axe de la vis en venant en appui à la fois sur l'écrou et sur l'élément de maintien. Ainsi, même lorsque la plaque de cuisson est soumise à des conditions extrêmes, notamment à des températures élevées, l'écrou est maintenu dans la position de serrage initiale. L'élément de maintien peut alors convenablement remplir sa fonction de rigidification de l'ensemble et empêcher une déformation de la plaque de cuisson tout au long de la vie de l'appareil de cuisson.

L'ensemble de cuisson est avantageusement complété par les caractéristiques suivantes, prises individuellement ou en l'une quelconque de leurs combinaisons techniquement possibles :
- l'élément de maintien comprend une portion latérale additionnelle, s'étendant en vis-à-vis de la portion latérale de l'élément de maintien par rapport à la portion centrale de l'élément de maintien, et l'élément de blocage comprend une portion latérale additionnelle, s'étendant en vis-à-vis de la portion latérale de l'élément de blocage par rapport à la portion centrale de l'élément de blocage, ladite portion latérale additionnelle étant configurée pour coopérer avec la portion latérale additionnelle de l'élément de maintien, de sorte à empêcher une rotation de l'écrou autour de l'axe propre de la vis ;
- la portion latérale de l'élément de maintien s'étend à partir de la portion centrale de l'élément de maintien sur une première hauteur, et la portion latérale de l'élément de blocage s'étend à partir de la portion centrale de l'élément de blocage sur une deuxième hauteur, la deuxième hauteur étant supérieure ou égale à la première hauteur ;
- la portion latérale de l'élément de maintien comprend une première paroi s'étendant à partir de la portion centrale et une deuxième paroi s'étendant selon un plan parallèle au plan de la portion centrale depuis la première paroi jusqu'à une extrémité libre, et la portion latérale de l'élément de blocage est destinée à être en contact avec la deuxième paroi de l'élément de maintien le long de l'extrémité libre ;
- la portion latérale de l'élément de blocage comprend une première paroi s'étendant à partir de la portion centrale de l'élément de blocage selon une direction d'extension, et une deuxième paroi s'étendant à partir de la première paroi selon une direction perpendiculaire à la direction d'extension, la deuxième paroi formant une ailette destinée à être pliée pour coopérer avec la portion latérale de l'élément de maintien, de sorte à empêcher une translation de l'élément de blocage selon l'axe propre de la vis ;
- la deuxième paroi de l'élément de blocage est destinée à être pliée le long d'une ligne de pliage s'étendant selon la direction d'extension et la portion latérale de l'élément de blocage présente une épaisseur réduite le long de la ligne de pliage ;
- la première paroi de l'élément de maintien s'étend à partir de la portion centrale sur une première hauteur, et la deuxième paroi de l'élément de blocage s'étend selon la direction d'extension sur une hauteur inférieure à la première hauteur, de sorte que l'ailette est destinée à s'étendre après pliage entre la portion centrale de l'élément de maintien et la deuxième paroi de l'élément de maintien ;
- la portion latérale de l'élément de blocage comprend une troisième paroi s'étendant à partir de la première paroi selon la direction perpendiculaire à la direction d'extension dans un sens opposé à la deuxième paroi, la troisième paroi formant une ailette additionnelle destinée à être pliée pour coopérer avec la portion latérale de l'élément de maintien, de sorte à empêcher une translation de l'élément de blocage selon l'axe propre de la vis.
- l'élément de maintien comprend une portion latérale additionnelle, s'étendant en vis-à-vis de la portion latérale de l'élément de maintien par rapport à la portion centrale de l'élément de maintien, et l'élément de blocage comprend une portion latérale additionnelle, s'étendant en vis-à-vis de la portion latérale de l'élément de blocage par rapport à la portion centrale de l'élément de blocage, la portion latérale additionnelle de l'élément de blocage comprenant une première paroi s'étendant à partir de la portion centrale de l'élément de blocage selon la direction d'extension, et une deuxième paroi s'étendant à partir de la première paroi selon la direction perpendiculaire à la direction d'extension, la deuxième paroi formant une ailette additionnelle destinée à être pliée pour coopérer avec la portion latérale additionnelle de l'élément de maintien, de sorte à empêcher une translation de l'élément de blocage selon l'axe propre de la vis ;
- la première paroi de la portion latérale de l'élément de blocage s'étend en vis-à-vis de la première paroi de la portion latérale additionnelle de l'élément de blocage, et la deuxième paroi de la portion latérale de l'élément de blocage s'étend selon un premier sens, la deuxième paroi de la portion latérale additionnelle de l'élément de blocage s'étend selon sens opposé au premier sens ;
- la portion centrale de l'élément de blocage présente un axe de symétrie, et l'orifice de blocage est positionné dans la portion centrale en dehors de l'axe de symétrie ;
- l'écrou comprend une tête présentant une section, et l'orifice de blocage présente une section de forme complémentaire à la section de la tête de l'écrou, de sorte à permettre une insertion de la tête de l'écrou dans l'orifice de blocage selon plusieurs positions angulaires ;
- la section de la tête de l'écrou a une forme polygonale comprenant un nombre N de côtés, et la section de l'orifice de blocage a une forme permettant l'insertion de l'orifice de blocage sur la tête de l'écrou selon un nombre de positions angulaires supérieur au nombre N de côtés de la tête d'écrou ;
- l'écrou est un écrou à embase ;
- l'élément de blocage comprend une pluralité d'orifices de blocage, de sorte que l'élément de blocage peut être positionné autour de l'écrou selon différents positionnements de la vis par rapport à l'élément de maintien ;
- l'ensemble de cuisson comprend
   une pluralité de vis montées fixe sur la plaque de cuisson, chaque vis s'étendant à partir de la plaque de cuisson selon un axe propre orthogonal au plan de cuisson ;
   une pluralité d'écrous, chaque écrou étant destiné à coopérer avec une vis respective de sorte à maintenir la portion centrale de l'élément de maintien contre le dispositif de cuisson avec le plan de la portion centrale parallèle au plan de cuisson ; et
   la portion centrale de l'élément de maintien comprend une pluralité d'orifices traversants, pour le passage de la pluralité de vis ;
   l'ensemble de cuisson comprenant en outre une pluralité d'éléments de blocage, chaque élément de blocage étant configuré pour empêcher une rotation d'un écrou respectif de la pluralité d'écrous autour de l'axe propre de leur vis respective ;
- le dispositif de cuisson comprend en outre une plaque de diffusion s'étendant dans un plan parallèle au plan de cuisson, et comprenant un orifice traversant destiné à recevoir la vis, la plaque de diffusion étant agencée entre la plaque de cuisson et l'élément de maintien et maintenue en contact avec la plaque de cuisson par l'élément de maintien ;
- la plaque de cuisson s'étend dans le plan selon une première direction sur une longueur de plaque, et l'élément de maintien est un raidisseur s'étendant selon la première direction sur une longueur supérieure ou égale à 80 % de la longueur de plaque ;
- la plaque de cuisson s'étend dans le plan selon une deuxième direction orthogonale à la première direction sur une largeur de plaque, et l'orifice traversant du raidisseur est destiné à recevoir la vis montée fixe sur la plaque de cuisson de sorte que le raidisseur est agencé au milieu de la largeur de plaque.

Selon un autre aspect, il est proposé un appareil de cuisson de type plancha comprenant un ensemble de cuisson tel que décrit précédemment.

Selon un autre aspect, il est proposé un procédé d'assemblage de l'ensemble de cuisson décrit précédemment, comprenant les étapes successives suivantes :
- positionnement de l'élément de maintien en vis-à-vis de la plaque de cuisson, de sorte que la vis montée fixe sur la plaque de cuisson traverse l'orifice traversant de l'élément de maintien ;
- fixation de l'élément de maintien en vis-à-vis de la plaque de cuisson par vissage de l'écrou sur la vis, le plan de la portion centrale de l'élément de maintien étant parallèle au plan de la plaque de cuisson ; et
- blocage d'une rotation de l'écrou autour de l'axe propre de la vis par insertion de l'écrou dans l'orifice de blocage de l'élément de blocage.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue éclatée d'un appareil de cuisson selon l'invention.
La figure 2 est une vue en coupe de l'appareil de cuisson de la figure 1.
La figure 3 est une vue en perspective d'une face inférieure d'un ensemble de cuisson de l'appareil de cuisson de la figure 1, avant assemblage.
La figure 4 est une vue en perspective de la face inférieure de l'ensemble de cuisson de la figure 1, après assemblage.
La figure 5 est une vue en perspective d'un élément de blocage.
La figure 6 est une vue latérale rapprochée de l'élément de blocage assemblé dans l'ensemble de cuisson.
La figure 7 est une vue en coupe rapprochée de l'élément de blocage assemblé dans l'ensemble de cuisson.
La figure 8 est un organigramme des étapes d'un procédé d'assemblage de l'ensemble de cuisson.

Sur l'ensemble des figures, les éléments similaires portent des références identiques.

### DESCRIPTION DETAILLEE DE L'INVENTION

### Appareil de cuisson 100 de type plancha

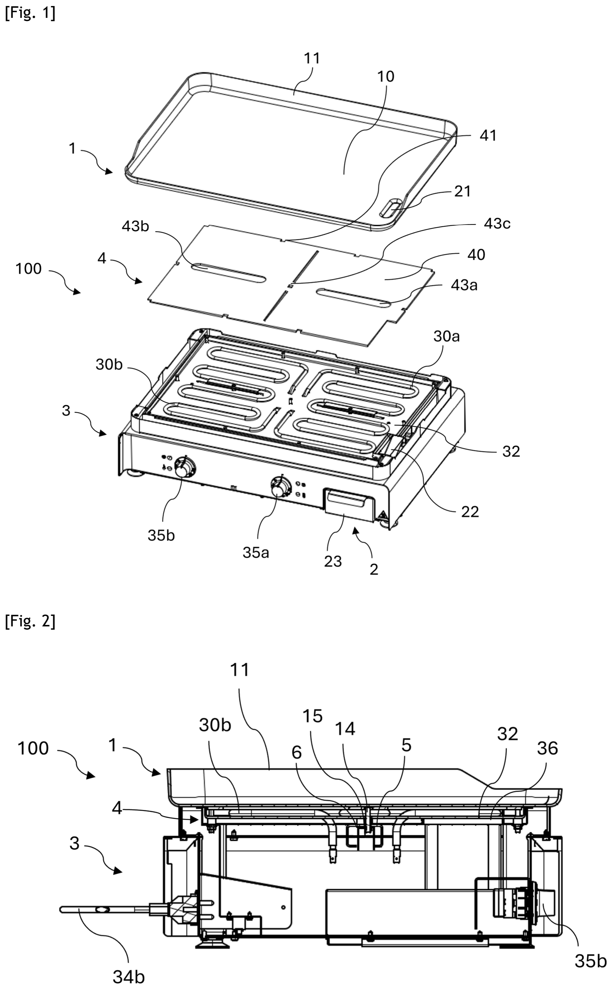

En référence à la figure 1 est présenté un appareil de cuisson 100 de type plancha, qui peut notamment être déplaçable. L'appareil de cuisson 100 est destiné à permettre une cuisson optimale de tout type d'aliments tels que des viandes, des poissons ou encore des poêlées de légumes.

L'appareil de cuisson 100 comprend une plaque de cuisson 1 disposée sur un support 3. Le support 3 comprend des moyens de chauffage configurés pour chauffer la plaque de cuisson 1 en vis-à-vis afin de saisir ou faire griller les aliments disposés sur une zone de cuisson 10 de la plaque de cuisson 1.

Le support 3 comprend des moyens de commande 35a, 35b des moyens de chauffage, typiquement sous forme de mollette. Cela permet à l'utilisateur de modifier la puissance des moyens de chauffage et donc la température de la plaque de cuisson 1 et en particulier de la zone de cuisson 10, selon le type de cuisson souhaité.

La zone de cuisson 10 de la plaque de cuisson 1 s'étend dans un plan. La plaque de cuisson 1 comprend également une bordure 11 d'un seul tenant s'étendant du côté de la zone de cuisson 10 sur toute la périphérie de la zone de cuisson. Une telle bordure 11 s'étend selon une direction de protrusion qui est de préférence sensiblement orthogonale au plan. Ainsi, la bordure 11 s'étend tout autour de la zone de cuisson 10 du côté de la plaque de cuisson 1 opposé au support 3, et a une hauteur suffisante pour permettre de contenir des matières liquides, par exemple des sucs ou des matières grasses, présentes dans la zone de cuisson 10.

L'appareil de cuisson 100 comprend de préférence un système d'évacuation 2. Le système d'évacuation 2 permet l'écoulement maitrisé des matières grasses depuis la plaque de cuisson 1 vers un bac de rétention agencé à l'intérieur du support 3. La présence du système d'évacuation 2 permet d'améliorer la qualité de cuisson de l'appareil de cuisson 100 et de faciliter le nettoyage de la plaque de cuisson 1, le système d'évacuation 2 permettant également l'écoulement de produits d'entretien liquides tels que des agents dégraissants utilisés pour nettoyer ou désinfecter la plaque de cuisson 1 après ou avant utilisation de l'appareil de cuisson 100.

La plaque de cuisson 1 comprend de préférence un orifice d'évacuation 21 traversant la zone de cuisson 10 et en communication de liquide avec le bac de rétention. L'orifice d'évacuation 21 est de préférence agencé sur un bord de la zone de cuisson 10, par exemple dans un coin de la plaque de cuisson 1. Cela permet à l'utilisateur de mieux maitriser l'évacuation de liquides issus de la cuisson, par exemple en cas d'excédent de graisse.

Le système d'évacuation 2 comprend de préférence une gouttière 22 (ou goulotte d'évacuation) solidaire du support 3 s'étendant entre la face inférieure de la plaque de cuisson 1, en vis-à-vis de l'orifice d'évacuation 21, et l'intérieur du bac de rétention, afin d'assurer la communication de liquide entre l'orifice d'évacuation 21 et le bac de rétention.

La gouttière 22 peut être fermée comme un tube de section adaptée à la forme de l'orifice d'évacuation 21 ou comprendre seulement des parois latérales. La gouttière 22 peut être formée par une tôle pliée et soudée sur la face inférieure de la plaque de cuisson 1 ou fixée sur le support 3 par soudure ou vissage. La gouttière 22 permet d'éviter des éclaboussures ou des projections à l'intérieur du support 3, et notamment en direction des moyens de chauffage 30a, 30b, qui pourraient causer une inflammation des graisses ou détériorer les composants du support 3.

Une trappe 23 peut être aménagée dans le support 3 de sorte à pouvoir retirer le bac de rétention après utilisation de l'appareil de cuisson 100 ou après nettoyage, afin de vider le bac de rétention.

Les moyens de chauffage peuvent comprendre un ou plusieurs brûleurs à gaz. Dans ce mode de réalisation, le support 3 comprend au moins un réservoir de gaz, par exemple de butane, en communication avec les brûleurs à gaz. De manière alternative, le support 3 comprend un tuyau d'approvisionnement permettant une communication de gaz entre une bombonne de gaz agencée à l'extérieur de l'appareil de cuisson 100 et les brûleurs à gaz.

Dans le mode de réalisation illustré, les moyens de chauffage comprennent deux résistances électriques 30a, 30b. L'utilisation de résistances électriques permet une utilisation sécurisée et plus simple de l'appareil de cuisson 100, puisque ces moyens de chauffage peuvent être directement alimentés en électricité par un câble d'alimentation relié à une prise électrique pour être connecté à un réseau électrique domestique. On comprendra que les moyens de chauffage de l'appareil de cuisson proposé ne sont pas limités à ce mode de réalisation.

De préférence, chaque résistance électrique 30a,30b peut être pilotée individuellement en puissance par l'intermédiaire d'un moyen de commande 35a,35b dédié. Cela permet d'adapter la température de la plaque de cuisson 1 selon la position des aliments dans la zone de cuisson 10. La zone de cuisson 10 est par exemple séparée en une première zone latérale chauffée à une température élevée par la première résistance électrique 30a en vis-à-vis, et une deuxième zone latérale chauffée à une température inférieure par la deuxième résistance électrique 30b en vis-à-vis. L'utilisateur peut ainsi saisir ou faire griller des aliments dans la première zone latérale, puis maintenir au chaud les aliments saisis dans la deuxième zone latérale en attendant le service.

Chaque résistance électrique peut avoir une puissance supérieure à 2500 W, de préférence égale à 2700 W. Cela permet de porter rapidement la plaque de cuisson 1 et en particulier la zone de cuisson 10 à une température très élevée, typiquement supérieure à 220°C, par exemple égale à 250°C, ou de préférence égale à 300°C. L'utilisateur peut ainsi adapter la température de cuisson sur une large gamme de températures selon le type de cuisson souhaité. De telles résistances électriques 30a, 30b permettent typiquement d'atteindre la température maximale de la zone de cuisson 10 en une faible durée, par exemple avec une durée de chauffe inférieure à 10 min.

Afin de maximiser la chaleur transmise par les moyens de chauffage 30a, 30b à la plaque de cuisson 1, les moyens de chauffage 30a, 30b ne doivent pas être séparés de la plaque de cuisson 1 par un isolant thermique tel que l'air. Pour permettre d'éviter ou de réduire l'épaisseur d'une couche d'air entre la plaque de cuisson 1 et les moyens de chauffage 30a, 30b, et maintenir la plaque de cuisson 1 solidaire du support 3, le support 3 comprend des moyens de fixation permettant d'assembler la plaque de cuisson 1 sur le support 3.

L'ensemble de cuisson comprend en particulier un élément de maintien 5 coopérant avec ces moyens de fixation. L'élément de maintien 5 est agencé dans le support 3, sous les moyens de chauffage 30a, 30b. Il permet de maintenir la plaque de cuisson 1 en vis-à-vis des moyens de chauffage 30a, 30b, et de rigidifier la plaque de cuisson 1 afin d'éviter une déformation de la zone de cuisson 10 au cours de la chauffe.

La face inférieure de la plaque de cuisson 1 comprend des moyens de fixation complémentaires avec l'élément de maintien 5. Cela permet l'assemblage simple de l'ensemble de cuisson. Plus précisément, la plaque de cuisson 1 comprend au moins une vis 14 s'étendant à partir d'une face inférieure de la plaque de cuisson 1, du côté opposé à la zone de cuisson 10, selon une direction transverse au plan de cuisson, typiquement normale au plan de cuisson. De manière alternative ou complémentaire, des gougeons peuvent être soudés sur la face inférieure de la plaque de cuisson 1 en vis-à-vis des moyens de chauffage 30a, 30b, et insérés dans des orifices prévus dans l'élément de maintien 5, comme il sera détaillé par la suite.

Dans le mode de réalisation illustré, le dispositif de cuisson comprend un empilement de plaques agencées entre la plaque de cuisson 1 et l'élément de maintien 5 du support 3. Plus précisément, l'appareil de cuisson 100 comprend en outre une plaque de diffusion 4. La plaque de diffusion 4 est agencée entre les moyens de chauffage 30a, 30b et la plaque de cuisson 1. La plaque de diffusion 4 est constituée d'un matériau résistant tel que l'acier. Elle permet de diffuser la puissance thermique émise par les moyens de chauffage 30a, 30b et d'homogénéiser la température de la zone de cuisson 10. Elle forme un réservoir thermique en ce qu'elle permet également d'augmenter l'inertie thermique de l'assemblage, et en particulier de conserver plus longtemps la zone de cuisson 10 à haute température même après l'arrêt des moyens de chauffage 30a, 30b.

La plaque de diffusion 4 est de préférence fixée à la plaque de cuisson 1. Elle permet ainsi de rigidifier l'assemblage de la plaque de cuisson 1 sur le support 3 et d'éviter une déformation de la plaque de cuisson 1 portée à haute température.

Afin de permettre la fixation de la plaque de cuisson 1 avec la plaque de diffusion 4, la plaque de diffusion 4 comprend au moins un orifice destiné au passage de la vis 14 solidaire de la plaque de cuisson 1.

Dans le mode de réalisation illustré, la plaque de diffusion 4 comprend une pluralité d'orifices de fixation 43a, 43b, 43c permettant le passage des moyens de fixation de la plaque de cuisson 1. Plus précisément, les orifices de fixation 43a, 43b, 43c permettant le passage des vis 14 soudées sur la face inférieure de la plaque de cuisson 1 pour autoriser leur insertion dans les orifices prévus dans l'élément de maintien 5.

La plaque de diffusion 4 a typiquement une forme semblable à la zone de cuisson 10 afin de pouvoir répartir la chaleur emmagasinée sur toute la superficie de la zone de cuisson 10.

La plaque de diffusion 4 a une forme sensiblement rectangulaire. Les côtes de la plaque de diffusion 4 peuvent comprendre des encoches 41 semi-circulaires afin de permettre le passage de moyens de fixation de la plaque de cuisson 1 sur le support 3, par exemple le passage de gougeons supplémentaires soudés sur la face inférieure de la plaque de cuisson 1 et destinés à être insérés dans des orifices correspondant du support 3.

La plaque de diffusion 4 peut également comprendre un orifice ou un espace aménagé en vis-à-vis de l'orifice d'évacuation 21 pour permettre l'évacuation de liquides depuis la plaque de cuisson 1 vers le bac de rétention.

L'appareil de cuisson 100 comprend de préférence une tôle de plaquage 32 agencée sous les moyens de chauffage 30a, 30b de sorte à former un fond du support 3. La tôle de plaquage 32 est maintenue solidaire du dispositif de cuisson comprenant la plaque de cuisson 1 grâce à l'élément de maintien 5. Plus précisément, l'élément de maintien 5 permet que les moyens de chauffage 30a, 30b soient convenablement comprimés entre la plaque de cuisson 1 ou la plaque de diffusion 4 éventuelle et la tôle de plaquage 32 après assemblage. Cela permet d'améliorer la performance de l'appareil de cuisson 100 en réduisant les pertes thermiques et la durée de chauffe de la plaque de cuisson 1.

La tôle de plaquage 32 comprend au moins un orifice permettant le passage de la vis 14 coopérant avec l'élément de maintien 5. De préférence, la tôle de plaquage 32 comprend une pluralité d'orifices pour le passage des vis et/ou des gougeons soudés sur la face inférieure de la plaque de cuisson 1.

La tôle de plaquage comprend en outre des orifices pour la connexion d'une extrémité des résistances électriques vers les câbles d'alimentations 34a, 34b et la connexion aux moyens de commande 33a, 33b.

De préférence, l'appareil de cuisson 100 comprend en outre une tôle d'écran 36 agencée en dessous de la tôle de plaquage 32 et des moyens de chauffage 30a, 30b. La tôle d'écran 36 permet de protéger les composants électroniques agencés dans le support 3, en particulier des composants des moyens de commande 33a, 33b et des câbles d'alimentation 34b agencés sous les moyens de chauffage 30a, 30b, à l'intérieur du support 3, des rayonnements des résistances électriques, qui pourraient entrainer une surchauffe des composants et un dysfonctionnement de l'appareil de cuisson 100.

De même que précédemment, la tôle d'écran 36 est agencée entre la plaque de cuisson 1 et l'élément de maintien 5. Elle comprend au moins un orifice permettant le passage de la vis 14, de sorte à pouvoir être plaquée contre le dispositif de cuisson, en l'occurrence contre la tôle de plaquage 32 sous la plaque de cuisson 1, par l'élément de maintien 5 après assemblage.

### Elément de maintien 5

En référence à la figure 2, l'élément de maintien 5 est configuré pour maintenir solidairement le dispositif de cuisson comprenant la plaque de cuisson 1, la plaque de diffusion 4, les moyens de chauffage 30a, 30b, la tôle de plaquage 32 et la tôle d'écran 36, et pour permettre l'assemblage du dispositif de cuisson sur le support 3.

Les moyens de fixation du support 3 comprennent un écrou 15 destiné à coopérer avec la vis 14 pour maintenir l'élément de maintien 5 contre le dispositif de cuisson. Plus précisément, l'élément de maintien 5 comprend une portion centrale 50 s'étendant dans un plan de maintien. La portion centrale 50 comprend un orifice traversant pour le passage de la vis 14.

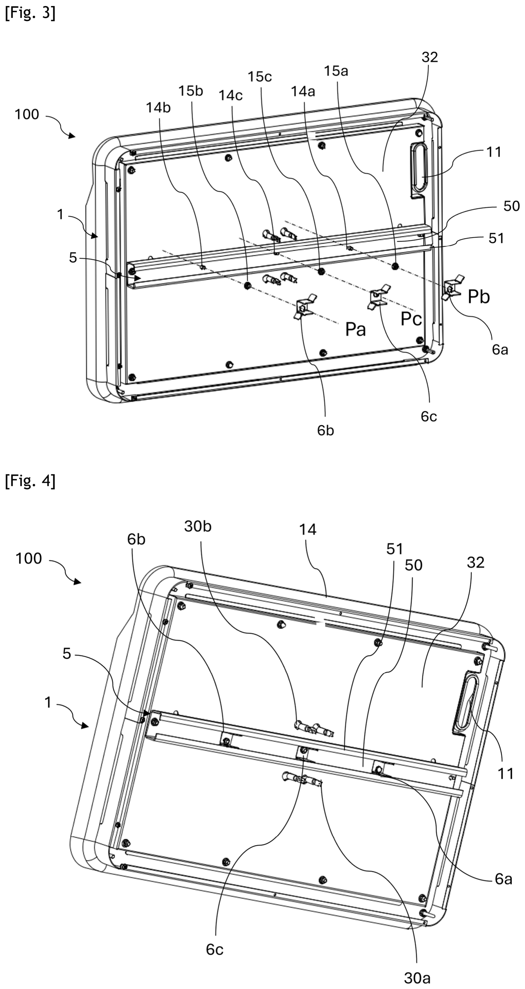

Lorsque l'ensemble est assemblé, c'est-à-dire lorsque l'écrou 15 est vissé et serré sur la vis 14, l'élément de maintien 5 est alors maintenu par l'écrou 15, le plan de cuisson étant parallèle au plan de maintien. Dans le mode de réalisation illustré sur les figures 3 et 4, la portion centrale 50 comprend une pluralité d'orifices traversants pour le passage de chacune des vis 14a, 14b, 14c solidaires de la plaque de cuisson 1. L'ensemble de cuisson comprend alors une pluralité d'écrous 15a, 15b, 15c, chacun destiné à être vissé sur une vis 14a, 14b, 14c respective afin de maintenir l'élément de maintien 5 plaqué sur le dispositif de cuisson. La multiplicité des moyens de fixation permet de répartir les efforts et contribue à réduire le risque de déformation de la plaque de cuisson 1 au cours de la chauffe.

L'élément de maintien 5 comprend également une portion latérale 51 s'étendant depuis la portion centrale 50 dans un plan latéral différent du plan de maintien. Typiquement, le plan latéral est orthogonal au plan de maintien.

Dans le mode de réalisation illustré, l'élément de maintien 5 est un raidisseur. Le raidisseur s'étend en vis-à-vis de la zone de cuisson 10 sur une longueur supérieure ou égale à 80 % de la longueur de la plaque de cuisson 10. De préférence, le raidisseur 5 s'étend sensiblement sur toute la longueur de la zone de cuisson 10, dans une région centrale de la plaque de cuisson 1. Par exemple, le raidisseur 5 comprend un orifice traversant destiné à recevoir la vis 14 montée fixe sur la plaque de cuisson 10 de sorte que le raidisseur 5 est agencé au milieu de la largeur de la plaque de cuisson.

Comme expliqué en introduction, l'écrou vissé sur la vis 14 permettant la fixation réversible de l'élément de maintien 5 a tendance à se dévisser sous l'effet de la chaleur, lorsque l'appareil de cuisson 100 est utilisé.

Afin d'empêcher ce phénomène, l'ensemble de cuisson proposé comprend un élément de blocage 6 de l'écrou 15. L'élément de blocage 6 coopère avec la portion latérale 51 de l'élément de maintien 5, de sorte à empêcher une rotation de l'écrou 15 autour de l'axe propre P de la vis 14.

Dans le mode de réalisation illustré, l'ensemble comprend une pluralité d'éléments de blocage 6a, 6b, 6c, chacun destiné à être inséré autour d'un écrou respectif 15a, 15b, 15c, afin d'empêcher l'écrou d'entrer en rotation autour de l'axe de vissage respectif Pa, Pb, Pc, sous l'effet de contraintes induites par la chauffe.

Plus généralement, on comprendra que l'ensemble peut comprendre un unique élément de blocage 6 comprenant une pluralité d'orifices de blocage, chacun dédié à un écrou 15 de l'ensemble. L'ensemble peut également comprendre un nombre variable de systèmes vis-écrou ou boulons, le nombre d'éléments de blocage 6 étant inférieur ou égal au nombre d'écrou à bloquer en rotation.

### Elément de blocage 6

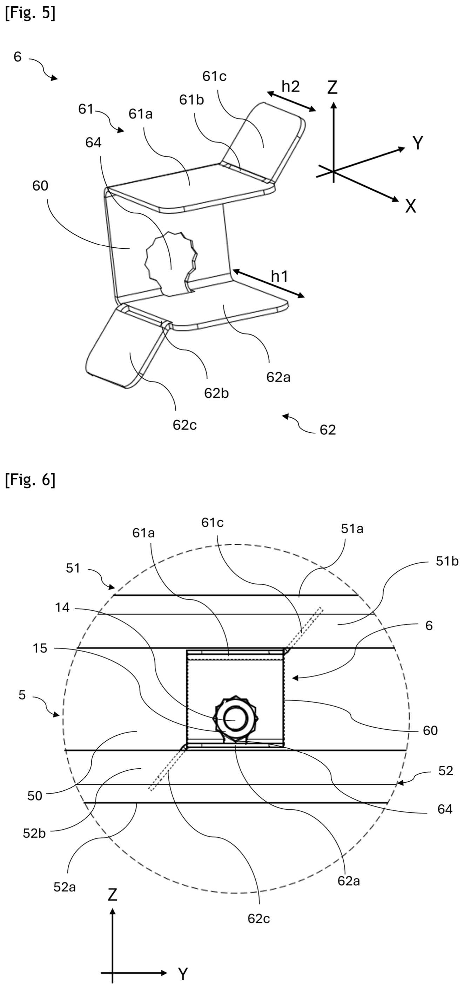

Par la suite, on décrira plus précisément un exemple d'élément de blocage 6 en référence aux figures 5 à 7. La présente divulgation ne se limite pas au mode de réalisation illustré.

L'élément de blocage 6 comprend une portion centrale 60 s'étendant dans un plan de blocage. L'élément de blocage 6 est configuré pour être positionné en vis-à-vis de l'élément de maintien 5 avec le plan de blocage parallèle au plan de maintien, lorsque l'élément de blocage 6 est assemblé sur l'écrou 15.

La portion centrale 60 comprend un orifice de blocage 64 dans lequel l'écrou 15 est destiné à être inséré.

De préférence, la portion centrale 60 de l'élément de blocage 6 présente un axe de symétrie. Dans le mode de réalisation illustré, la portion centrale 60 a une section carrée et présente donc quatre axes de symétries distincts. Plus généralement, la portion centrale 60 peut avoir une section rectangulaire ou présenter une autre forme géométrique adéquate pour permettre son positionnement contre la portion centrale 50 de l'élément de maintien 5, autour de l'écrou 15.

L'orifice de blocage 64 peut être positionné dans la portion centrale 60, et appartenir à tous les axes de symétries de la portion centrale 60. De préférence, l'orifice de blocage 64 est agencé en dehors d'un axe de symétrie, ici en dehors de l'axe de symétrie parallèle à la direction portée par l'axe Y le long duquel s'étend l'élément de maintien 5. Cet agencement non centré permet le passage de câbles d'alimentation ou de l'électronique de puissance pour le pilotage des moyens de chauffage 30a, 30b, ou de la sonde d'un thermostat configuré pour mesurer la température de la plaque de cuisson 1.

L'élément de blocage 6 comprend une portion latérale 61 configurée pour coopérer avec la portion latérale 51 de l'élément de maintien 5, de sorte à empêcher une rotation de l'écrou 15 autour de l'axe propre P de la vis 14. Par exemple, la portion latérale 61 s'étend jusqu'à la portion latérale 51 de l'élément de maintien 5, de sorte à former une butée. Ainsi, si un couple est exercé sur l'écrou 15 et tend à le dévisser, la force de réaction contraire exercée par la portion latérale 51 sur la portion latérale 61, transmise à la paroi de l'orifice de blocage 64 entourant l'écrou 15, permet d'empêcher la rotation de l'écrou 15 autour de l'axe propre P. Ainsi, l'élément de maintien 5 reste plaqué contre le dispositif de cuisson au cours de l'utilisation de l'appareil de cuisson 100.

La portion latérale 61 de l'élément de blocage 6 peut comprendre une première paroi 61a s'étendant à partir de la portion centrale 60 de l'élément de blocage selon une direction d'extension X, et une deuxième paroi 61c s'étendant à partir de la première paroi 61a selon une direction Y perpendiculaire à la direction d'extension X.

Comme illustré sur la figure 5, la deuxième paroi 61c forme une ailette destinée à être pliée. De préférence, la deuxième paroi 61c est destinée à être pliée le long d'une ligne de pliage 61b s'étendant selon la direction d'extension X orthogonale au plan de la portion centrale 60, c'est-à-dire du plan de blocage. Lors de l'assemblage de l'élément de blocage 6 par insertion autour de l'écrou 15, la deuxième paroi 61c peut être rabattue manuellement ou à l'aide d'une pince ou d'un outil adapté.

Comme il sera décrit par la suite, l'ailette est configurée pour coopérer avec la portion latérale 51 de l'élément de maintien 5, de sorte à empêcher une translation de l'élément de blocage selon l'axe propre de la vis, typiquement parallèle à la direction d'extension X.

La portion latérale de l'élément de blocage 6 peut présenter une épaisseur réduite le long de la ligne de pliage 61b. Cela permet de faciliter le pliage de la deuxième paroi de l'élément de blocage 6 par l'opérateur lors de l'assemblage de l'ensemble de cuisson.

Dans le mode de réalisation illustré, la portion latérale 61 de l'élément de blocage 6 comprend un orifice traversant le long de la ligne de pliage 61b. La deuxième paroi 61c est ainsi reliée à la première paroi 61a par l'intermédiaire de deux zones de jonction séparées par l'orifice traversant. Cela permet de faciliter encore l'assemblage de l'ensemble de cuisson.

De préférence, la portion latérale 61 l'élément de blocage 6 comprend une troisième paroi s'étendant à partir de la première paroi 61a selon la direction Y perpendiculaire à la direction d'extension X dans un sens opposé à la deuxième paroi 61c. La troisième paroi forme ainsi une ailette additionnelle opposée à l'ailette formée par pliage de la deuxième paroi 61c selon la ligne de pliage 61b. La troisième paroi est destinée à être pliée pour coopérer avec la portion latérale 51 de l'élément de maintien 5, de sorte à empêcher une translation de l'élément de blocage 6 selon l'axe propre P de la vis 14. La présence de deux ailettes de part et d'autre de la première paroi 61a permet de bloquer une rotation de l'écrou 15 dans les deux sens de rotation autour de l'axe propre P. Cela permet de mieux répartir les contraintes ou forces de réaction de l'élément de maintien 5 sur l'élément de blocage 6.

L'élément de blocage 6 peut être formé par découpage laser et pliage d'une tôle en acier, par exemple en acier inoxydable. L'épaisseur de la tôle est par exemple comprise entre 0,8 mm et 1,2 mm, de préférence sensiblement égale à 1 mm (à 10% près). Une telle épaisseur permet d'obtenir un élément de blocage 6 avec une rigidité suffisante pour ne pas se déformer sous l'effet des contraintes exercées par la coopération avec l'écrou 15 et l'élément de maintien 5.

### Coopération de l'élément de blocage 6 avec l'écrou 15

De manière générale, la vis 14 comprend un corps fileté, et l'écrou 15 comprend un corps formant une tête et comprenant un orifice central taraudé, avec un taraudage complémentaire au filetage de la vis 14, de sorte à pouvoir être inséré dans un mouvement combiné de translation et de rotation autour de la vis 14, jusqu'au contact de l'élément de maintien 5. Le serrage de l'élément de maintien 5 sur le dispositif de cuisson comprenant la plaque de cuisson 1 par rotation de l'écrou 15 sur la vis 14 peut se faire manuellement ou automatiquement, à l'aide d'outils adaptés. De préférence, un couple de maintien exercé par l'écrou 15 sur la vis 14 lors de l'assemblage est supérieur à 4,5 N.m.

L'écrou 15 a une tête présentant une section dans un plan parallèle au plan de maintien, et l'orifice de blocage 64 présente une section de forme complémentaire à la section de la tête de l'écrou 15, de sorte à permettre une insertion de la tête de l'écrou dans l'orifice de blocage 64. Typiquement, l'écrou 15 a une tête de section hexagonale, et l'orifice de blocage 64 a une section hexagonale de taille légèrement supérieure, afin de permettre une insertion de l'écrou 15 à travers l'orifice de blocage 64 avec le minimum de jeu possible.

De préférence, la section de la tête de l'écrou a une première forme polygonale comprenant un nombre N1 de côtés, c'est-à-dire a une section polygonale d'ordre N1, typiquement N1 = 6 pour une section hexagonale, ou encore N1 = 4 pour une section carrée.

La section de l'orifice de blocage 64 a une deuxième forme polygonale comprenant un nombre de côtés N2 strictement supérieur au nombre N1 de côtés de la section de l'écrou 15. Cela permet l'insertion de la tête de l'écrou 15 dans l'orifice de blocage 64 selon un nombre de positions angulaires distinctes supérieur, en l'occurrence égale au nombre N2 et donc de faciliter l'installation de l'élément de blocage 6 quelle que soit la position angulaire de l'écrou 15 vissé sur la vis 14.

Par exemple, la première forme polygonale est convexe, et dans la deuxième forme polygonale est non convexe. La section non convexe de l'orifice de blocage 64 présente une forme étoilée, avec un nombre de côtés N2 égal au quadruple du nombre N1 de côtés de la section de l'écrou 15.

La forme polygonale de la section contribue à empêcher la rotation de la tête de l'écrou 15 par rapport à l'élément de blocage 6, lorsque l'élément de blocage 6 coopère avec l'élément de maintien 5.

De préférence, l'écrou 15 est un écrou à embase. En d'autres termes, l'écrou 15 comprend une embase formée par une collerette plane, typiquement circulaire, centrée sur l'orifice central taraudé du corps de l'écrou 15. La collerette a un diamètre supérieur au diamètre de la section de la tête de l'écrou 15, afin d'augmenter la surface de contact entre la portion centrale 50 de l'élément de maintien 5 et l'écrou 15. Cela permet de renforcer le blocage de l'élément de maintien 5 sur le dispositif de cuisson.

De préférence, l'élément de blocage 6 est alors inséré autour de la tête de l'écrou 15, de sorte que la portion centrale 60 est en contact avec l'embase. La présence de l'ailette ou de la pluralité d'ailettes coopérant avec l'élément de maintien 5 comme il sera expliqué par la suite, permet de bloquer une translation de l'écrou 15 le long de l'axe propre P, grâce à la pression exercée par la portion centrale 60 sur l'embase de l'écrou 15.

### Coopération de l'élément de maintien 5 avec l'élément de blocage 6

De préférence, l'élément de maintien 5 comprend une portion latérale additionnelle 52a, s'étendant en vis-à-vis de la portion latérale 51 de l'élément de maintien 5 par rapport à la portion centrale 50 de l'élément de maintien 5. Cela permet d'augmenter la rigidité intrinsèque de l'élément de maintien 5.

L'élément de maintien 5 peut être formé par découpage et pliage d'une tôle en acier, par exemple en acier inoxydable ou encore en acier galvanisé. L'épaisseur de la tôle est par exemple comprise entre 1,5 mm et 3 mm, de préférence égale à 2mm (à 10% près). L'utilisation d'une tôle fine permet de réduire la masse et le coût de l'appareil de cuisson 100, au détriment de la rigidité de l'élément de maintien 5.

L'élément de blocage 6 peut comprendre alors une portion latérale additionnelle 62, s'étendant en vis-à-vis de la portion latérale 61 de l'élément de blocage 6 par rapport à la portion centrale 60 de l'élément de blocage 6. La portion latérale additionnelle 62 est configurée pour coopérer avec la portion latérale additionnelle 52 de l'élément de maintien 5, de sorte à empêcher une rotation de l'écrou 15 autour de l'axe propre P de la vis 14. La présence de deux portions latérales 61, 62permet une meilleure répartition des efforts et donc un blocage de l'écrou 15 résistant à des couples plus importants. De plus, la présence des deux portions latérales 61, 62 permet de faciliter la prise de l'élément de blocage 6 par un opérateur lors de l'assemblage ou le démontage de l'ensemble, et donc d'accélérer des opérations de maintenance et la fabrication de l'appareil de cuisson 100.

De préférence, la portion latérale 51, 52 de l'élément de maintien comprend une première paroi 51a, 51b s'étendant à partir de la portion centrale 50 et une deuxième paroi 51b, 52b s'étendant selon un plan parallèle au plan de maintien de la portion centrale 50 depuis la première paroi jusqu'à une extrémité libre. La section de l'élément de maintien 5 a ici une section symétrique formant partiellement un rectangle dont l'un des côtés présente une ouverture. L'ouverture doit être suffisante pour permettre l'insertion simple de l'élément de blocage 6 sur l'écrou 15.

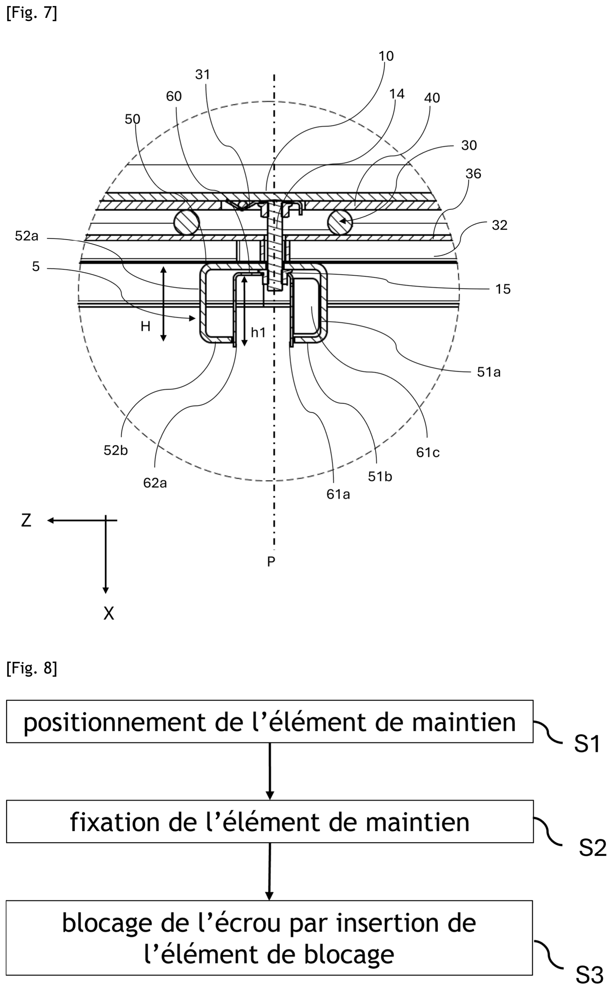

Dans ce mode de réalisation, la portion latérale 61, et la portion latérale additionnelle 62 éventuelle, de l'élément de blocage 6 est destinée à être en contact avec la deuxième paroi 51b, 52b de l'élément de maintien 5 le long de l'extrémité libre. Un appui ligne plan est formé entre les portions latérales 61, 51 des deux éléments. Ainsi, un mouvement de translation de l'élément de blocage 6 selon une direction normale à l'axe propre P dans le plan de la figure 7 est empêché par la présence des deuxièmes parois 51b, 52b des portions latérales de l'élément de maintien 5.

Comme illustré sur la vue en coupe de la figure 7, la portion latérale 51 de l'élément de maintien 5 peut s'étendre à partir de la portion centrale 50 de l'élément de maintien sur une première hauteur H. La première hauteur H peut dépendre des contraintes d'assemblage de l'appareil de cuisson 10, et notamment de son encombrement, et de la rigidité recherchée. Typiquement, la première hauteur H est comprise entre 25 mm et 30 mm, de préférence sensiblement égale à 27 mm.

La portion latérale 61 de l'élément de blocage s'étend à partir de la portion centrale 60 de l'élément de blocage 6 sur une deuxième hauteur h1, la deuxième hauteur h1 est telle que l'extrémité libre de la portion latérale 61 dépasse de la portion latérale 51 de l'élément de maintien 5. Par exemple, la deuxième hauteur h1 est supérieure ou égale à la première hauteur H, afin de permettre le blocage en rotation de l'écrou 15.

De préférence, lorsque l'élément de blocage 6 comprend la deuxième paroi 61c, cette deuxième paroi 61c s'étend selon la direction d'extension X sur une hauteur h2 inférieure à la première hauteur H. Ainsi, la deuxième paroi 61c pliée de sorte à former l'ailette peut s'étendre, après pliage, entre la portion centrale 50 de l'élément de maintien 5 et la deuxième paroi 51b de l'élément de maintien 5, comme illustré sur la figure 6. Cela permet également de bloquer une translation de l'écrou 15 selon la direction d'extension X.

En effet, lors de la chauffe de la plaque de cuisson 1, un phénomène d'allongement de la vis 14 ou une variation de volume due à une déformation des plaques du dispositif de cuisson serrées entre elles peut conduire l'écrou 15 à ne plus être plaqué contre l'élément de maintien 5 à chaque montée en température. La présence de la deuxième paroi 61c de la portion latérale de l'élément de blocage en vis-à-vis de la deuxième paroi 51b de l'élément de maintien 5 permet de bloquer l'élément de blocage 6 en translation selon l'axe propre P de la vis 14, et donc d'empêcher la translation de l'écrou 15, lorsque la portion centrale 60 de l'élément de blocage 6 est en appui plan sur l'embase de l'écrou 15.

De préférence, la portion latérale additionnelle de l'élément de blocage 6 comprend, comme la portion latérale décrite précédemment, une première paroi 62a s'étendant à partir de la portion centrale 60 de l'élément de blocage 6 selon la direction d'extension X, et une deuxième paroi 62c s'étendant à partir de la première paroi 62a selon la direction Y perpendiculaire à la direction d'extension X. La deuxième paroi 62c forme une ailette additionnelle destinée à être pliée pour coopérer avec la portion latérale additionnelle 52 de l'élément de maintien 5, de sorte à empêcher une translation de l'élément de blocage 6 selon l'axe propre P de la vis 14.

Les caractéristiques décrites pour la portion latérale s'appliquent à la portion latérale additionnelle de l'élément de blocage 6. Par exemple, la portion latérale additionnelle de l'élément de blocage 6 peut comprendre une ligne de pliage additionnelle 62b pour former plus simplement l'ailette additionnelle.

De même, comme précédemment, la deuxième paroi 62c formant l'ailette additionnelle peut s'étendre selon la direction d'extension X selon une hauteur h2 inférieure à la première hauteur H de la portion latérale de l'élément de maintien 5, de sorte à pouvoir être pliée à l'intérieur de l'espace formé entre la première paroi 52a de la portion latérale additionnelle 52 de l'élément de maintien 5, et la deuxième paroi 52b de la portion latérale additionnelle 52.

Dans le mode de réalisation illustré, la portion latérale 61 et la portion latérale additionnelle 62 de l'élément de blocage 6 présentent une symétrie centrale autour d'un axe parallèle à la direction d'extension X. En d'autres termes, la première paroi 61a de la portion latérale de l'élément de blocage 6 s'étend en vis-à-vis de la première paroi 62a de la portion latérale additionnelle de l'élément de blocage 6, et la deuxième paroi 61c de la portion latérale s'étend selon un premier sens, tandis que la deuxième paroi 62c de la portion latérale additionnelle selon sens opposé au premier sens. Cela permet de mieux répartir les efforts et de coopérer efficacement avec l'élément de maintien 5.

Dans un mode de réalisation non représenté, la portion latérale 61 et la portion latérale additionnelle 62 de l'élément de blocage 6 présentent une symétrie axiale par rapport à un axe parallèle à la direction perpendiculaire Y. Dans ce mode de réalisation, la deuxième paroi 61c de la portion latérale et la deuxième paroi 62c de la portion latérale additionnelle s'étendent en vis-à-vis, depuis le même côté de leur première paroi 61a, 62a respective.

On comprendra plus généralement que les ailettes ainsi formées peuvent avoir des longueurs différentes selon la direction perpendiculaire Y, et peuvent être pliées autour de leur ligne de pliage 61b, 62b respective pour former avec la direction d'extension X un angle variable. De préférence, les deuxièmes parois 61c, 62c sont dimensionnées pour coopérer, c'est-à-dire être en appui ou en contact linéaire avec l'élément de maintien 5, pour un angle de pliage compris entre 10° et 90°, de préférence égal à 45°.

De préférence, la plaque de cuisson 1 comprend la pluralité de vis 14a, 14b, 14c qui ne sont pas alignées sur une même droite, comme sur la figure 4. La position de l'orifice de blocage 64 peut varier pour adapter l'élément de blocage 6 à l'emplacement de l'écrou 15, tout en permettant la coopération avec l'élément de maintien 5. De préférence, les vis 14a, 14b, 14c sont agencées de sorte qu'une rotation de 180° de l'élément de blocage 6 permet d'adapter l'élément de blocage 6c correspondant au désaxage de la vis centrale 14c, et de permettre le passage des câbles à l'intérieur de l'élément de maintien 5, à travers les éléments de blocage 6a, 6b, 6c.

L'ensemble de cuisson peut être intégré dans un appareil de cuisson de type plancha comme illustré.

Selon un autre aspect, il est décrit un procédé d'assemblage de l'ensemble de cuisson tel que décrit précédemment. Le procédé comprend les étapes successives suivantes, en référence à la figure 8.

Au cours d'une première étape S1, l'élément de maintien 5 est positionné en vis-à-vis de la plaque de cuisson 1, de sorte que la vis 14 montée fixe sur la plaque de cuisson 1 traverse l'orifice traversant de l'élément de maintien 5. Comme expliqué précédemment, la surface inférieure de la plaque de cuisson 1 comprend de préférence une pluralité de vis 14a, 14b, 14c ou de gougeons soudés, de sorte à n'autoriser aucun déplacement dans un plan parallèle au plan de cuisson du dispositif de cuisson comprenant l'empilement de plaques.

Au cours de cette étape, la plaque de diffusion 4, les moyens de chauffage 30a, 30b, les tôles 32, 36 peuvent être également empilées de sorte à être traversées par la vis 14.

Au cours d'une deuxième étape S2, l'élément de maintien 5 est fixé en vis-à-vis de la plaque de cuisson 1 par vissage de l'écrou 15 sur la vis 14, le plan de maintien étant parallèle au plan de cuisson. L'écrou 15 peut être serré manuellement ou à l'aide d'un outil approprié.

Au cours d'une troisième étape S3, une rotation de l'écrou 15 autour de l'axe propre P de la vis 14 est bloqué par insertion de l'écrou 15 dans l'orifice de blocage 64 de l'élément de blocage 6. Plus précisément, l'élément de blocage 6 est placé en vis-à-vis de l'écrou 15, l'orifice de blocage 64 étant aligné sur l'axe propre P, puis translaté jusqu'à ce que la portion centrale 60 de l'élément de blocage soit au contact de l'élément de maintien 5 ou de l'embase de l'écrou 15.

De préférence, la ou les deuxièmes parois de la portion latérale 61c de l'élément de blocage est pliée de sorte à former l'ailette coopérant avec l'élément de maintien 5.

## Revendications

1. Ensemble de cuisson (100) d'un appareil de cuisson, comprenant
- un dispositif de cuisson ayant une plaque de cuisson (1) s'étendant dans un plan de cuisson et une vis (14) montée fixe sur la plaque de cuisson (1) s'étendant selon un axe propre (P) perpendiculairement au plan de cuisson ;
- un élément de maintien (5) comprenant une portion centrale (50) plane comprenant un orifice traversant pour le passage de la vis (14) et une portion latérale (51) dans un plan latéral différent du plan de la portion centrale (50) ;
- un écrou (15) destiné à coopérer avec la vis (14) pour maintenir la portion centrale (50) de l'élément de maintien (5) contre le dispositif de cuisson ;
**caractérisé en ce qu'**il comprend en outre un élément de blocage (6) de l'écrou (15) comprenant une portion centrale (60) plane avec un orifice de blocage (64) dans lequel l'écrou (15) est destiné à être inséré et une portion latérale (61) configurée pour coopérer avec la portion latérale (51) de l'élément de maintien (5), de sorte à empêcher une rotation de l'écrou (15) autour de l'axe propre (P) de la vis (14).

2. Ensemble de cuisson selon la revendication 1, dans lequel l'élément de maintien (5) comprend une portion latérale additionnelle (52), s'étendant en vis-à-vis de la portion latérale (51) de l'élément de maintien (5) par rapport à la portion centrale (50) de l'élément de maintien (5), et dans lequel l'élément de blocage (6) comprend une portion latérale additionnelle (62), s'étendant en vis-à-vis de la portion latérale (61) de l'élément de blocage (6) par rapport à la portion centrale (60) de l'élément de blocage (6), ladite portion latérale additionnelle (62) étant configurée pour coopérer avec la portion latérale additionnelle (52) de l'élément de maintien (5), de sorte à empêcher une rotation de l'écrou (15) autour de l'axe propre (P) de la vis (14).

3. Ensemble de cuisson selon l'une des revendications 1 et 2, dans lequel la portion latérale (51) de l'élément de maintien (5) s'étend à partir de la portion centrale (50) de l'élément de maintien (5) sur une première hauteur (H), et dans lequel la portion latérale (61) de l'élément de blocage (6) s'étend à partir de la portion centrale (60) de l'élément de blocage (6) sur une deuxième hauteur (h1), la deuxième hauteur (h1) étant supérieure ou égale à la première hauteur (H).

4. Ensemble de cuisson selon l'une quelconque des revendications 1 à 3, dans lequel la portion latérale (51) de l'élément de maintien (5) comprend une première paroi (51a) s'étendant à partir de la portion centrale (50) et une deuxième paroi (51b) s'étendant selon un plan parallèle au plan de la portion centrale (50) depuis la première paroi (51a) jusqu'à une extrémité libre, et dans lequel la portion latérale (61) de l'élément de blocage (6) est destinée à être en contact avec la deuxième paroi (51b) de l'élément de maintien (5) le long de l'extrémité libre.

5. Ensemble de cuisson selon l'une quelconque des revendications 1 à 4, dans lequel la portion latérale (61) de l'élément de blocage (6) comprend une première paroi (61a) s'étendant à partir de la portion centrale (60) de l'élément de blocage selon une direction d'extension (X), et une deuxième paroi (61c) s'étendant à partir de la première paroi selon une direction (Y) perpendiculaire à la direction d'extension (X), la deuxième paroi (61c) formant une ailette destinée à être pliée pour coopérer avec la portion latérale (51) de l'élément de maintien (5), de sorte à empêcher une translation de l'élément de blocage (6) selon l'axe propre (P) de la vis (14).

6. Ensemble de cuisson selon l'une des revendications 1 à 5, dans lequel
l'élément de maintien (5) comprend une portion latérale additionnelle (52), s'étendant en vis-à-vis de la portion latérale (51) de l'élément de maintien (5) par rapport à la portion centrale (50) de l'élément de maintien (5), et dans lequel
l'élément de blocage (6) comprend une portion latérale additionnelle (62), s'étendant en vis-à-vis de la portion latérale (61) de l'élément de blocage (6) par rapport à la portion centrale (60) de l'élément de blocage (6), la portion latérale additionnelle (62) de l'élément de blocage (6) comprenant une première paroi (62a) s'étendant à partir de la portion centrale (60) de l'élément de blocage selon la direction d'extension (X), et une deuxième paroi (62c) s'étendant à partir de la première paroi (62a) selon la direction (Y) perpendiculaire à la direction d'extension (X), la deuxième paroi (62c) formant une ailette additionnelle destinée à être pliée pour coopérer avec la portion latérale additionnelle (52) de l'élément de maintien (5), de sorte à empêcher une translation de l'élément de blocage (6) selon l'axe propre de la vis (14).

7. Ensemble de cuisson selon l'une quelconque des revendications 1 à 6, dans lequel la portion centrale (60) de l'élément de blocage (6) présente un axe de symétrie, et dans lequel l'orifice de blocage (64) est positionné dans la portion centrale (60) en dehors de l'axe de symétrie.

8. Ensemble de cuisson selon l'une quelconque des revendications 1 à 7, dans lequel l'écrou (15) comprend une tête présentant une section, et dans lequel l'orifice de blocage (64) présente une section de forme complémentaire à la section de la tête de l'écrou (15), de sorte à permettre une insertion de la tête de l'écrou (15) dans l'orifice de blocage (64) selon plusieurs positions angulaires.

9. Ensemble de cuisson selon l'une quelconque des revendications 1 à 8, dans lequel l'écrou (15) est un écrou à embase.

10. Ensemble de cuisson selon l'une quelconque des revendications 1 à 9, dans lequel l'élément de blocage (6) comprend une pluralité d'orifices de blocage (64), de sorte que l'élément de blocage (6) peut être positionné autour de l'écrou (15) selon différents positionnements de la vis (14) par rapport à l'élément de maintien (5).

11. Ensemble de cuisson selon l'une quelconque des revendications 1 à 10, comprenant
une pluralité de vis (14a, 14b, 14c) montées fixe sur la plaque de cuisson (1), chaque vis (14) s'étendant à partir de la plaque de cuisson (1) selon un axe propre (P) orthogonal au plan de cuisson ;
une pluralité d'écrous (15a, 15b, 15c), chaque écrou (15) étant destiné à coopérer avec une vis (14) respective de sorte à maintenir la portion centrale (50) de l'élément de maintien (5) contre le dispositif de cuisson avec le plan de la portion centrale (50) parallèle au plan de cuisson ;
dans lequel la portion centrale (50) de l'élément de maintien (5) comprend une pluralité d'orifices traversants, pour le passage de la pluralité de vis (14a, 14b, 14c);
l'ensemble de cuisson comprenant en outre une pluralité d'éléments de blocage (6a, 6b, 6c), chaque élément de blocage (6) étant configuré pour empêcher une rotation d'un écrou (15) respectif de la pluralité d'écrous (15a, 15b, 15c) autour de l'axe propre (Pa, Pb, Pc) de la vis (14) respective.

12. Ensemble de cuisson selon l'une quelconque des revendications 1 à 11, dans lequel le dispositif de cuisson comprend en outre une plaque de diffusion (4) s'étendant dans un plan parallèle au plan de cuisson, et comprenant un orifice traversant destiné à recevoir la vis (14), la plaque de diffusion (4) étant agencée entre la plaque de cuisson (1) et l'élément de maintien (5) et maintenue en contact avec la plaque de cuisson (1) par l'élément de maintien (5).

13. Ensemble de cuisson selon l'une quelconque des revendications 1 à 12, dans lequel la plaque de cuisson (1) s'étend dans le plan selon une première direction sur une longueur de plaque, et dans lequel l'élément de maintien (5) est un raidisseur s'étendant selon la première direction sur une longueur supérieure ou égale à 80 % de la longueur de plaque.

14. Appareil de cuisson de type plancha comprenant un ensemble de cuisson selon l'une quelconque des revendications 1 à 13.

15. Procédé d'assemblage de l'ensemble selon l'une quelconque des revendications 1 à 14, comprenant les étapes successives suivantes :
- positionnement de l'élément de maintien (5) en vis-à-vis de la plaque de cuisson (1), de sorte que la vis (14) montée fixe sur la plaque de cuisson (1) traverse l'orifice traversant de l'élément de maintien (5) ;
- fixation de l'élément de maintien (5) en vis-à-vis de la plaque de cuisson (1) par vissage de l'écrou (15) sur la vis (14), le plan de la portion centrale (50) de l'élément de maintien (5) étant parallèle au plan de la plaque de cuisson (1) ;
- blocage d'une rotation de l'écrou (15) autour de l'axe propre (P) de la vis (14) par insertion de l'écrou (15) dans l'orifice de blocage (64) de l'élément de blocage (6).
